# EUROPÄISCHE PATENTSCHRIFT

(11) **EP 2 308 153 B1**
(45) Veröffentlichungstag und Bekanntmachung des Hinweises auf die Patenterteilung: **28.12.2016**
(21) Anmeldenummer: 09744902.9
(22) Anmeldetag: 10.06.2009
(51) Int. Cl.: H02K 5/06, H02K 5/20, H02K 15/14, B22C 7/02, B22C 9/04

(54) **VERFARHEN ZUR HERSTELLUNG EINER ELEKTRISCHEN MASCHINE SOWIE ELEKTRISCHE MASCHINE FÜR EIN HYBRIDFAHRZEUG**
METHOD FOR MANUFACTURING AN ELECTRICAL MACHINE AND ELECTRICAL MACHINE FOR A HYBRID VEHICLE
PROCÉDÉ DE FABRICATION D'UNE MACHINE ÉLECTRIQUE ET MACHINE ÉLECTRIQUE POUR VÉHICULE HYBRIDE

(30) Priorität: 30.07.2008 DE 102008040873
(43) Veröffentlichungstag der Anmeldung: 13.04.2011
(73) Patentinhaber: Robert Bosch GmbH, 70442 Stuttgart (DE)
(72) Erfinder: KERN, Denis, 70190 Stuttgart-Ost (DE); HERZBERGER, Andreas, 73553 Alfdorf (DE)
(86) Internationale Anmeldenummer: PCT/EP2009/057135
(87) Internationale Veröffentlichungsnummer: WO 2010/012537

(56) Entgegenhaltungen:
- DE-A1-102007 014 352
- US-A- 6 109 333

## Beschreibung

Die Erfindung betrifft ein Verfahren zur Herstellung einer elektrischen Maschine gemäß dem Oberbegriff des Anspruchs 1 sowie eine elektrische Maschine gemäß den Ansprüchen 7 und 8.

### Stand der Technik

Bei derzeitigen Ausführungen elektrischer Maschinen ist das Gehäuse überwiegend mehrteilig aufgebaut. Dabei gibt es insbesondere zwei Bauformen, die zur Anwendung kommen. Zum ersten eine dreiteilige Bauform des Gehäuses, wie in DE 1 765 059 U dargestellt und zum zweiten eine zweiteilige Bauform, wie in EP 1 041 699 B1 dargestellt.

Die dreiteilige Bauform besteht aus einem mittleren zylinderförmigen Körper, in dem der Stator der elektrischen Maschine aufgenommen ist, und aus zwei Lagerschildern, die das Gehäuse an beiden Seiten abschließen. In den Lagerschildern werden ein Loslager bzw. ein Festlager aufgenommen. Nachteilig an diesem Aufbau ist eine lange Toleranzkette zwischen den beiden Lagerstellen, die eine Aufweitung des Funktionsluftspaltes zwischen Rotor und Stator zur Folge hat, beziehungsweise ein sehr enges Toleranzfeld für die Herstellung der drei Gehäuseeinzelteile erforderlich macht.

Zweiteilige Gehäuse ermöglichen eine Fertigung mit weiterem Toleranzfeld bei gleichbleibendem Luftspalt, wirken allerdings bezüglich der Flexibilität und der Erfüllung von unterschiedlichen Anforderungen einschränkend, weil die Gehäuse annähernd vollständig angepasst werden müssen; beispielsweise bei Änderungen von möglichen vorgegebenen Schnittstellen, wie Kühlmittel- oder Hochvoltanschlüssen. Dies ist auch bei dreiteiligen Gehäusen der Fall.

Zur Herstellung von elektrischen Maschinen und speziell zur Herstellung von Gehäusen von elektrischen Maschinen werden im Allgemeinen Gussverfahren, wie das zum Beispiel in DE 693 18 449 T2 dargestellte Lost-Foam-Gussverfahren angewendet.

US 6 109 333 A offenbart ein Verfahren zur Herstellung einer elektrischen Maschine gemäß dem Oberbegriff des Anspruchs 1.

Die Aufgabe der Erfindung besteht darin, den Aufbau eines im Lost-Foam-Gussverfahren hergestellten Gehäuses der elektrischen Maschine so zu gestalten, dass eine maximale Flexibilität bezüglich der verschiedenen vorgegebenen Schnittstellen mittels einer einzigen Gehäusevariante erreicht werden kann.

### Offenbarung der Erfindung

Das erfindungsgemäße Verfahren zur Herstellung einer elektrischen Maschine gemäß Anspruch 1 und die nach dem erfindungsgemäßen Verfahren hergestellte elektrische Maschine gemäß Anspruch 7 oder 8 ermöglichen es, eine maximale Flexibilität des Gehäuses bezüglich vorgegebener Schnittstellen zu erreichen.

Vorteilhafte Ausgestaltungen der Erfindung sind in den abhängigen Ansprüchen definiert.

Das erfindungsgemäße Verfahren zur Herstellung der elektrischen Maschine mit den in Anspruch 1 genannten Merkmalen schlägt vor ein Gehäuse der elektrischen Maschine in folgenden Verfahrensschritten herzustellen.

Das Herstellen eines Gehäuseschäumteils aus zumindest drei Einzelschäumteilen, wobei der Einsatz von wenigstens drei Einzelschäumteilen die Möglichkeit bietet, das Gehäuseschäumteil nach einem Baukastenprinzip herzustellen, wodurch die Anzahl notwendiger Werkzeuge zur Herstellung der Schäumteile gering gehalten wird und sich Kosten zur Herstellung einsparen lassen. Je variantenreicher das Endprodukt ist, umso mehr Kosten lassen sich einsparen, wenn gleiche Werkzeuge für mehrere Varianten einsetzbar sind.

Das Gehäuseschäumteil in Einzelschäumteilen herzustellen, bietet den Vorteil es in Scheibenbauweise herzustellen, beispielsweise bestehend aus einer Mittelscheibe, einer Ringscheibe und einer Lagerschildscheibe. Im Gegensatz zur Herstellung des Gehäuseschäumteils aus einem einzelnen hohen Werkzeug, werden die Einzelschäumteile in flacheren Werkzeugen hergestellt, wodurch das Gießverfahren optimiert und dadurch auch kostengünstiger wird.

Ein weiterer Verfahrensschritt zur Herstellung des Gehäuses der elektrischen Maschine ist das Herstellen eines Gehäusegussrohlings mittels des Gehäuseschäumteils nach einem Lost-Foam-Gussverfahren. Das Lost-Foam-Gussverfahren bietet innovative Möglichkeiten der Bauteilgestaltung, indem Einzelschäumteile zu einem einzigen Gehäuseschäumteil zusammengefügt werden. Zudem bietet das Gussverfahren auch eine hohe Änderungsflexibilität bezüglich der Einzelschäumteile, was vorteilhaft für die Variantenvielfalt des Gehäuses ist.

In einer Ausführung des Verfahrens wird das Gehäuseschäumteil aus den Einzelschäumteilen gebildet und die Einzelschäumteile werden durch ein Klebeverfahren koaxial zur Rotorachse miteinander verbunden. Dabei werden wenigstens in einem Einzelschäumteil Grundgeometrien von Kühlkanälen ausgebildet, so dass die ausgebildeten Grundgeometrien der Kühlkanäle in dem Gehäuseschäumteil eine durchgängige Grundgeometrie eines Kühlkanals des Gehäuses bilden und die Einzelschäumteile in solcher Weise aneinander gefügt sind, dass in den Einzelschäumteilen ausgebildete Grundgeometrien der Kühlkanäle in dem Gehäuseschäumteil eine durchgängige Grundgeometrie des Kühlkanals des Gehäuses bilden. Das Aneinanderkleben der Einzelschäumteile hat den Vorteil, dass die Schäumteile beim Handling ihre Form beibehalten. Von Vorteil ist auch die Flexibilität bezüglich der Gestaltung und der axialen Ausdehnung des Kühlkanals. Je nach Länge der elektrischen Maschine und des eingebauten Stators kann der Kühlkanal beispielsweise ausschließlich in der Mittelscheibe ausgebildet sein. Ist aufgrund der Auslegung der elektrischen Maschine eine größere axiale Ausdehnung des Kühlkanals notwendig, so kann sich dieser über die Mittelscheibe in die Ringscheibe und/oder in die Lagerschildscheibe erstrecken. Der Kühlkanal ist bereits in das Gehäuse eingeformt, wodurch sich Dichtflächen und zusätzliche Bauteile zur Bildung eines Kühlkanals einsparen lassen, wodurch Kosten verringert und mögliche Fehlerquellen, die zum Ausfall der elektrischen Maschine führen können, vermieden werden.

In einer weiteren Ausführung der Erfindung ist das Gehäuseschäumteil in seiner Ausdehnung in axialer Richtung veränderbar, indem das Einzelschäumteil der Ringscheibe in seiner axialen Ausdehnung verändert wird und/oder das Einzelschäumteil der Lagerschildscheibe in seiner axialen Ausdehnung verändert wird. Indem beispielsweise das Einzelschäumteil der Mittelscheibe auf konstanter Länge belassen wird und nur die Einzelschäumteile der Ringscheibe und der Lagerschildscheibe verändert werden, lassen sich Kosten zur Herstellung von Werkzeugen sparen. Je nach Aufbau und Anforderungen an die elektrische Maschine kann die Gehäuselänge flexibel angepasst werden, ohne dass das Werkzeug zur Herstellung des Einzelschäumteils der Mittelscheibe verändert werden muss.

In einer weiteren Ausführung der Erfindung wird das Einzelschäumteil der Ringscheibe aus einem ersten und einem zweiten Ringschäumteil gebildet. Die beiden Ringschäumteile werden koaxial zur Rotorachse gefügt, wobei sie vorteilhafterweise zueinander in eine Vielzahl von Winkelpositionen bezüglich der Rotorachse drehbar ausrichtbar sind. Die zweiteilige Bauform ermöglicht es, in dem ersten Ringschäumteil einen Kühlkanal auszubilden, der nach dem Zusammenkleben mit dem Einzelschäumteil der Mittelscheibe in vorbestimmter Weise eine Grundgeometrie eines Kühlkanals oder einen Teil einer Grundgeometrie eines Kühlkanals bildet. Das zweite Ringschäumteil, das eine Schnittstelle zu anderen Komponenten, wie zum Beispiel einem Lagerschild darstellt, wird so mit dem ersten Ringschäumteil verbunden, dass vorgegebene Anforderungen erfüllt werden. Das flexible Ausrichten der zwei Ringschäumteile in nahezu jede beliebige Winkelposition ermöglicht die Erfüllung einer Vielzahl von Anforderungen bezüglich vorhandener Anschlüsse, wie zum Beispiel die richtige Positionierung einer Anbindung für einen Hochvoltanschluss.

Eine andere Ausführung sieht vor, dass das Einzelschäumteil der Ringscheibe aus einem Einzelschäumteil gebildet wird und das Einzelschäumteil durch ein Werkzeug aus zwei Ringschäumformhälften hergestellt wird. Die Ringschäumformhälften werden koaxial zur Rotorachse gefügt und geschlossen, woraus sich eine Gesamtkavität für das Einzelschäumteil der Ringscheibe ergibt. Des Weiteren sind die Ringschäumformhälften bezüglich der Rotorachse zueinander in eine Vielzahl von Winkelpositionen drehbar ausrichtbar. Bei entsprechender Werkzeuggestaltung ist nahezu jede Winkelposition möglich. Vorteile dieser Ausführung ergeben sich analog zu den Vorteilen der Ausführung mit zwei Ringschäumteilen.

In einer weiteren Ausführung der Erfindung wird die Position des ersten und zweiten Ringschäumteils zueinander durch die Anordnung am Gehäuse angeordneter Kühlmittelanschlüsse und einer am Lagerschild angeordneten Anbindung vorgegeben. Gleiches gilt auch für die Position der ersten und zweiten Ringschäumformhälfte zueinander. Die Kühlmittelanschlüsse und die am Lagerschild angeordnete Anbindung sind in dieser Ausführung vorteilhafterweise so ausrichtbar, dass bei verschiedenen Anforderungen flexibel reagiert werden kann und vorhandene Anschlüsse und Schnittstellen beibehalten werden können.

In einer Weiterbildung der Erfindung wird der Gehäusegussrohling innenseitig spanabhebend bearbeitet, wodurch ein Anschlag ausgebildet wird, an dem der Statorkörper nach der Montage des Stators im Gehäuse anliegt. Vorteilhaft an dieser Ausführung ist die variable Positionierung des Anschlags und somit die variable Positionierung des Stators. Die Position des Anschlags wird vorteilhafterweise so gewählt, dass der montierte Stator vollständig von dem in das Gehäuse integrierten Kühlkanal überdeckt wird.

In einer electrischen Maschine für ein Hybridfahrzeug, die nach dem erfindungsgemäßen Verfahren hergestellt ist, lässt sich das in einem Guss hergestellte einteilige Gehäuse analog zum oben beschriebenen Gehäuseschäumteil in ein Lagerschildteil, ein Mittelteil und ein Ringteil unterteilen. Dabei weist das Lagerschildteil an einer Endseite Vorsprünge zur Befestigung des Gehäuses an mindestens einer vorhandenen Komponente auf und es weist an der Endseite radial in Richtung der Rotorachse eine Lageraufnahme auf. Das Mittelteil weist Kühlmittelanschlüsse am Außenumfang auf und das Ringteil weist über den Außenumfang verteilte Vorsprünge auf, an denen das Lagerschild anbringbar ist. Vorteilhaft an dieser Ausführungsform sind die einstückig angeformten Vorsprünge am Lagerschildteil und am Ringteil, weil vorhandene Komponenten und das Lagerschild direkt an das Gehäuse befestigt werden können. Dies geschieht beispielsweise über Schraubverbindungen. Die einstückig am Lagerschildteil angeformte Lageraufnahme, die vor der Aufnahme des Lagers bearbeitet wird, ermöglicht eine präzisere Lagerung des Rotors, als wenn diese über zwei montierte Lagerschilder am Gehäuse geschieht. Ein weiterer Vorteil sind die am Außenumfang des Mittelteils angeordneten Kühlmittelanschlüsse, die durch ihre zentrale Lage am Gehäuse eine optimale Kühlmittelversorgung und somit Kühlung der elektrischen Maschine gewährleisten.

In einer weiteren Ausführungsform der elektrischen Maschine ist die am Lagerschild angeordnete Anbindung ein Hochvoltanschluss. Der Hochvoltanschluss ist vorteilhafterweise an dem Lagerschild angeordnet, so dass bei veränderten Anforderungen an den Hochvoltanschluss nicht auch Teile des Gehäuses angepasst werden müssen.

Die beschriebene elektrische Maschine findet bevorzugt in hybridangetriebenen Fahrzeugen Anwendung.

Weitere Vorteile und vorteilhafte Ausgestaltungen ergeben sich aus der Beschreibung und der nachfolgenden Zeichnung.

### Kurze Beschreibung der Zeichnung

Ausführungen der Erfindung sind in der Zeichnung dargestellt und in der nachfolgenden Beschreibung näher erläutert.

Es zeigen:
Figur 1: eine Darstellung einer Schnittzeichnung einer elektrischen Maschine hergestellt nach dem erfindungsgemäßen Verfahren;
Figur 2: eine perspektivische Darstellung eines Gehäuseschäumteils einer ersten Ausführung nach Fig. 1;
Figur 3: eine perspektivische Darstellung eines Einzelschäumteils einer Lagerschildscheibe der ersten Ausführung nach Fig. 1;
Figur 4: eine perspektivische Darstellung eines Einzelschäumteils einer Mittelscheibe der ersten Ausführung nach Fig. 1;
Figur 5 a): eine perspektivische Darstellung eines Einzelschäumteils einer Ringscheibe der ersten Ausführung nach Fig. 1 in einer ersten Ansicht;

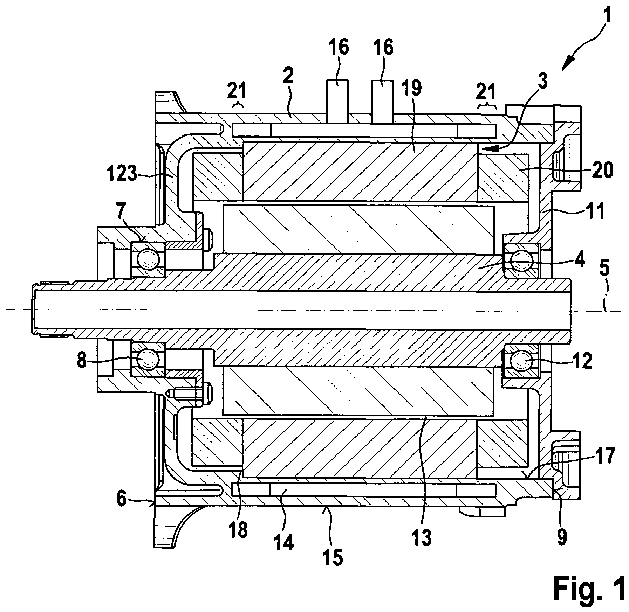

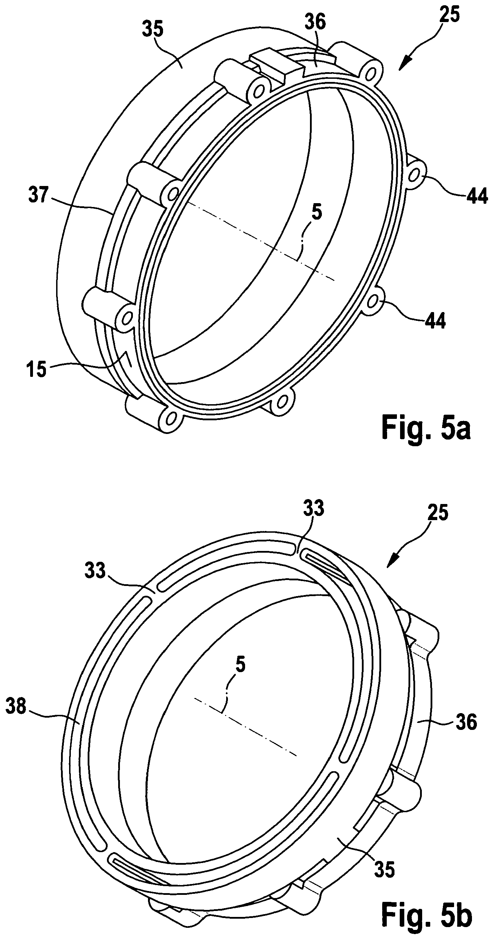

Figur 5 b): eine perspektivische Darstellung des Einzelschäumteils der Ringscheibe der ersten Ausführung nach Fig. 1 in einer weiteren Ansicht;

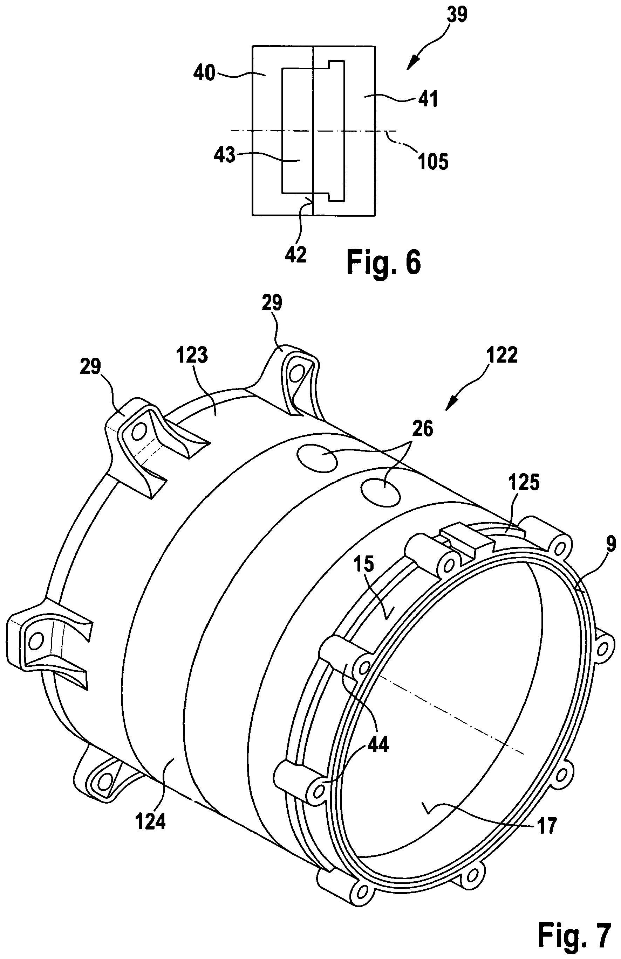

Figur 6: eine Darstellung einer Schnittzeichnung eines Werkzeugs zur Herstellung eines Einzelschäumteils einer Ringscheibe;
Figur 7: eine perspektivische Darstellung eines Gehäusegussrohlings der ersten Ausführung nach Fig. 1;

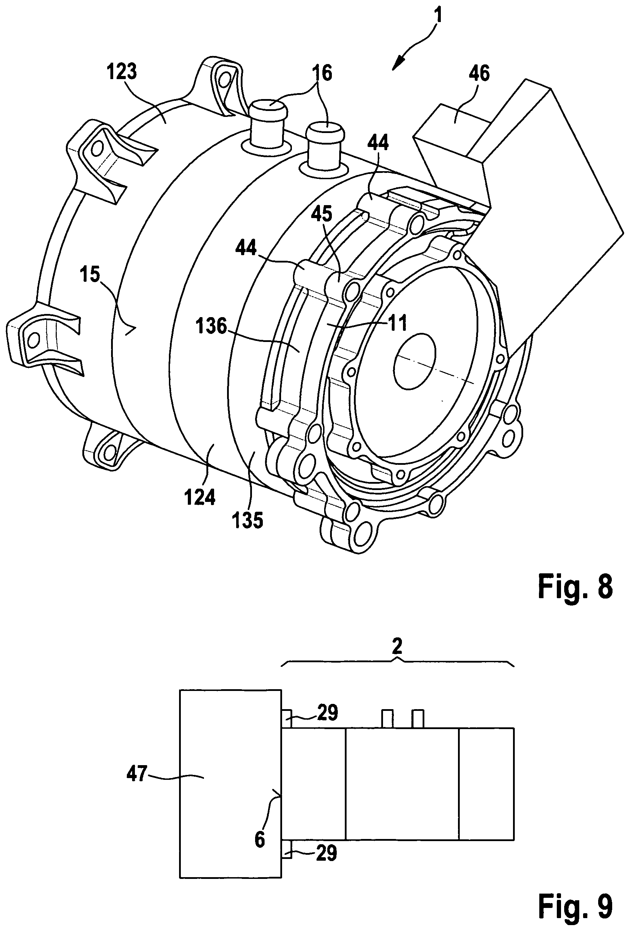

Figur 8: eine perspektivische Darstellung der elektrischen Maschine der ersten Ausführung nach Fig. 1;
Figur 9: eine Seitenansicht der elektrischen Maschine der ersten Ausführung nach Fig. 1 mit einer vorhandenen Komponente;

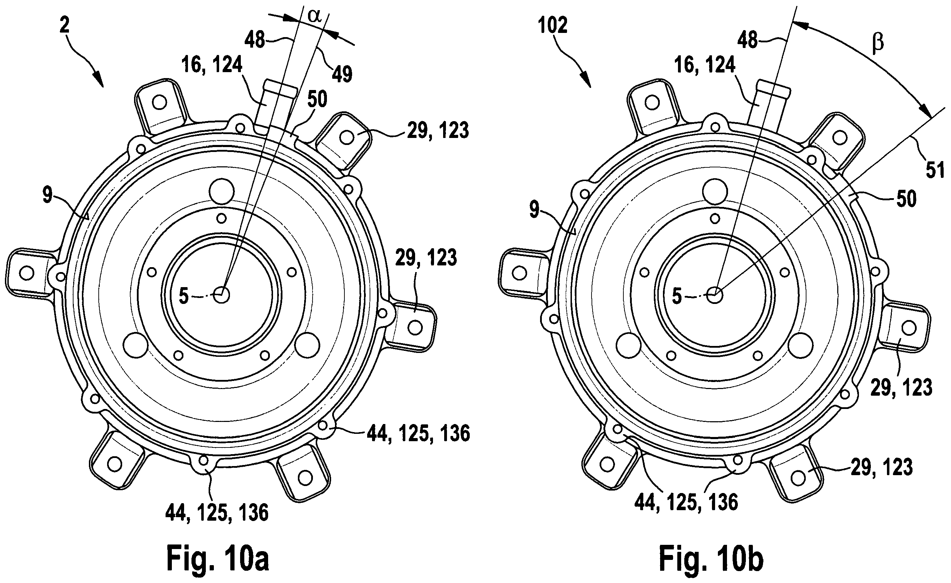

Figur 10 a): eine Draufsicht auf eine Endseite der ersten Ausführungsform des Gehäuses nach Fig. 1;
Figur 10 b): eine Draufsicht auf eine Endseite einer zweiten Ausführungsform des Gehäuses und

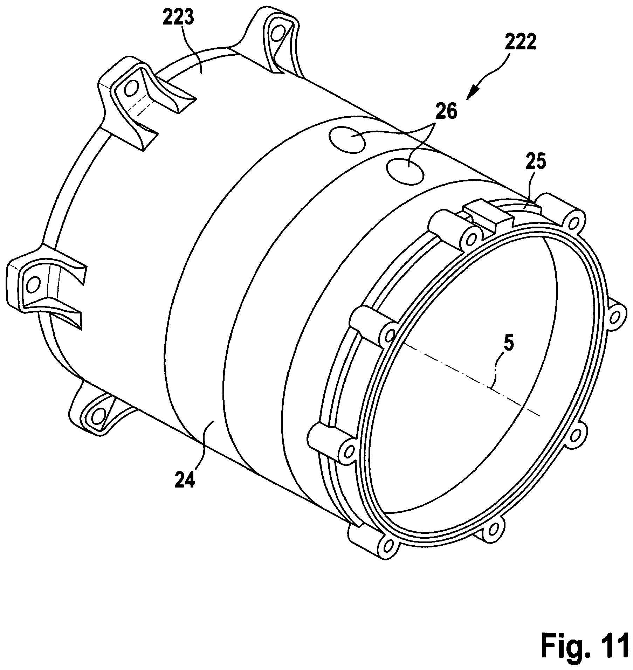

Figur 11: eine perspektivische Darstellung eines Gehäuseschäumteils einer dritten Ausführung mit verlängerter Lagerschildscheibe.

### Ausführungsformen der Erfindung

Die in Fig. 1 dargestellte Schnittzeichnung zeigt eine elektrische Maschine 1, die nach einem erfindungsgemäßen Verfahren hergestellt wurde. Die elektrische Maschine 1 besteht aus einem Gehäuse 2, in dem ein Stator 3 aufgenommen ist und in dem ein Rotor 4 drehbar um eine Rotorachse 5 angeordnet ist. Der Stator 3 wird zumindest aus einem Statorkörper 19 und Statorwicklungen 20 gebildet. An einer Lagerschildseite 6 des Gehäuses 3 ist ein Lagerschildteil 123 einstückig angeformt, welches in einer bearbeiteten Lageraufnahme 7 ein Festlager 8 zur Lagerung des Rotor 4 aufnimmt. An einer gegenüberliegenden Ringseite 9 des Gehäuses 2 ist ein Lagerschild 11 befestigt, das ein Loslager 12 zur Lagerung des Rotors 4 aufnimmt. Die Befestigung des Lagerschildes 11 am Gehäuse 2 erfolgt beispielsweise über eine hier nicht dargestellte Schraubverbindung. Zwischen dem Stator 3 und dem Rotor 4 befindet sich ein Luftspalt 13, der so gering wie möglich gehalten werden muss, damit die elektrische Maschine 1 einen optimalen Wirkungsgrad erreicht.
In dem Gehäuse 2 ist ein Kühlkanal 14 ausgebildet, der mit Kühlmittel durchströmt werden kann, das über zwei am Außenumfang 15 angeordnete Kühlmittelanschlüsse 16 in den Kühlkanal 14 eingeleitet wird. An einer Innenseite 17 des Gehäuses 2 ist ein Anschlag 18 ausgearbeitet, an dem der Stator 3 mit seinem Statorkörper 19 anliegt. Der Anschlag 18 wird beispielsweise durch ein spanabhebendes Verfahren, insbesondere durch Drehen, von der Ringseite 9 bis hin zur gewünschten Position des Anschlags 18 hergestellt. Die Position des Anschlags 18 im Gehäuse wird abhängig von der Statorlänge und dem Statoraufbau gefertigt. Der Statoraufbau ergibt sich aus den Bauteilen des Stators 3, wobei die Statorwicklungen 20 aus verteilten Wicklungen oder Einzelzahnwicklungen gebildet sein können. Dabei ragen verteilte Wicklungen weiter aus dem Statorkörper 19 heraus als Einzelzahnwicklungen.
Folgende Kriterien muss die Position des Anschlags 18 demnach erfüllen: Ein erstes Kriterium ist, dass der Kühlkanal 14 den Statorkörper 19 maximal, insbesondere vollständig, überdeckt (Statorlänge), wobei in der dargestellten Ausführungsform eine Überdeckung 21 des Statorkörpers 19 erreicht ist. Eine maximale Kühlmantelüberdeckung soll erzielt werden, um eine Optimierung der Kühlleistung und damit einhergehend eine Optimierung der nutzbaren Leistung der elektrischen Maschine 1 zu erzielen. Als zweites Kriterium dürfen die Statorwicklungen 20 nicht das Gehäuse 2 berühren, weil ein Isolationsabstand eingehalten werden muss (Statoraufbau). Der Stator 3 wird in dieser Ausführung in das Gehäuse 2 eingeschrumpft, kann aber alternativ auch eingepresst sein oder anderweitig befestigt werden, um gegen ein verdrehen oder axiales wandern gesichert zu sein.

Ein vorteilhaftes Fertigungsverfahren zur Herstellung des Gehäuses 3 ist das Lost-Foam-Verfahren. Dabei wird ein geschäumtes Modell des Gussteils hergestellt, das sogenannte Schäumteil. Ein Werkzeug zur Herstellung des Schäumteils wird beispielsweise mit Kunststoffkügelchen aus Polystyrol befüllt und anschließend wird Hochtemperaturdampf in die Kunststoffkügelchen geblasen, um sie miteinander zu verschmelzen. Dies erzeugt ein verdampfbares Modell aus Polymer, das nach dem Herausnehmen aus dem Werkzeug eine im Wesentlichen mit dem entsprechend gewünschten endgültigen Gussprodukt identische Form aufweist. Das Modell wird dann mit einer dünnen, wasserlöslichen Schlichte überzogen, in bindemittelfreien Sand eingesandet und abgegossen. Der flüssige Gießwerkstoff, bevorzugt Aluminium oder Gussstahl, verdampft das Schäumteil und nimmt den Hohlraum in der Sandform ein.

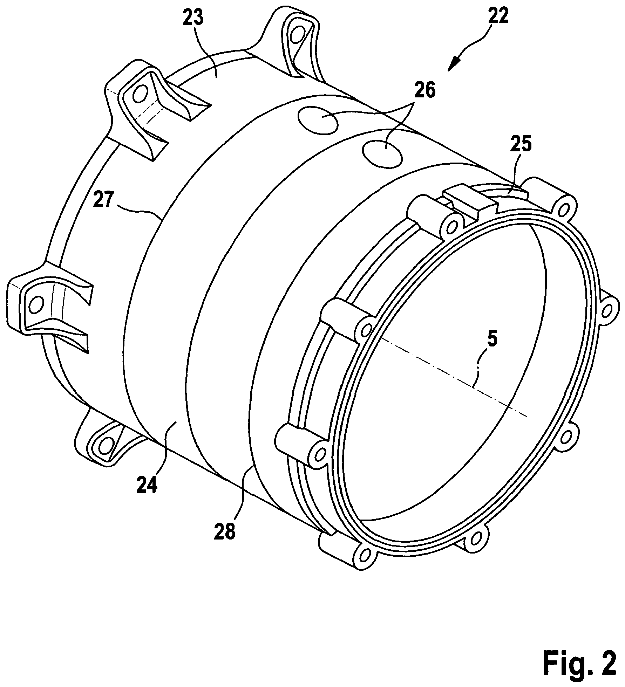

Eine perspektivische Darstellung eines Gehäuseschäumteils 22 der ersten Ausführung der Erfindung ist in Fig. 2 gezeigt. Das Gehäuseschäumteil 22 wird aus drei Einzelschäumteilen 23, 24, 25 gebildet, die koaxial zur Rotorachse 5 durch ein Klebeverfahren zusammengefügt werden. Die Einzelschäumteile 23, 24, 25 sind eine Lagerschildscheibe 23, eine Mittelscheibe 24 mit integrierten Öffnungen 26 und eine Ringscheibe 25. Im Klebeverfahren wird das Einzelschäumteil der Lagerschildscheibe 23 mit dem Einzelschäumteil der Mittelscheibe 24 an einer ersten Klebenaht 27 verklebt. Das Einzelschäumteil der Ringscheibe 25 wird anschließend an einer zweiten Klebenaht 28 an die Mittelscheibe 24 geklebt. Alternativ kann auch die Ringscheibe 25 zuerst an die Mittelscheibe 24 geklebt werden und anschließend die Lagerschildscheibe 23 an die Mittelscheibe 24.

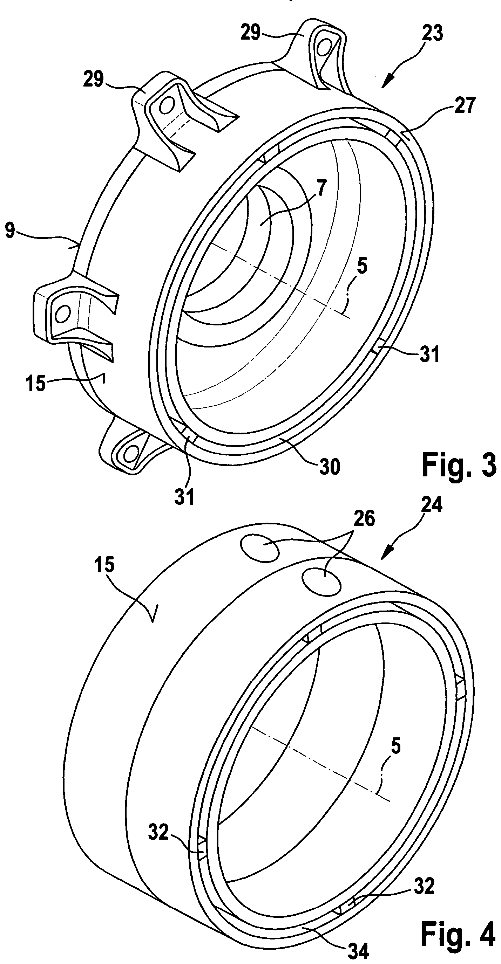

Die Einzelschäumteile 23, 24, 25 sind in den Figuren 3, 4, und 5 gezeigt und nachfolgend näher beschrieben. In Fig. 3 ist eine perspektivische Darstellung des topfförmigen Einzelschäumteils der Lagerschildscheibe 23 der ersten Ausführung gezeigt. An den Außenumfang 15 der Lagerschildscheibe 23 sind an der Ringseite 9 Vorsprünge 29 angeordnet, die im späteren Lost-Foam-Verfahren in einem Stück mit angegossen werden. Des Weiteren ist an der Ringseite 9 in radialer Richtung nach Innen zur Rotorachse 5 eine Geometrie der Lageraufnahme 7 ausgebildet. Auf der Seite der Klebenaht 27 zum Mittelteil 24 ist eine Geometrie eines Kühlkanals 30 ausgebildet, die in dieser Ausführungsform Stege 31 aufweist. Die Stege 31 dienen der Stabilisierung des Einzelschäumteils der Lagerschildscheibe 23 und sie bilden mit weiteren Stegen 32 (Fig. 4), 33 (Fig. 5 a)) der Mittelscheibe 24 und der Ringscheibe 25 eine Geometrie des fertigen Kühlkanals 14 des Gehäuses 2 in Mäanderform. Durch die Stege 31, 32, 33 wird das Kühlmittel durch den Kühlkanal 14 geleitet. In weiteren Ausführungsformen der Erfindung kann beispielsweise auf die Stege 31 verzichtet werden, so dass der Kühlkanal 14 ohne Stege 31 ausgebildet wird. In diesem Fall können die drei Einzelschäumteile 23, 24, 25 zueinander in jeder gewünschten Winkelposition zur Rotorachse 5 ausgerichtet und zusammengeklebt werden, die die vorgegebenen Anforderungen an das Gehäuse x2 erfüllen.

Fig. 4 zeigt eine perspektivische Darstellung des Einzelschäumteils der Mittelscheibe 24 der ersten Ausführung. Am Außenumfang 15 der Mittelscheibe 24 sind Öffnungen 26 ausgebildet. Diese dienen beim später hergestellten Gussteil zum Anschließen der Kühlmittelanschlüsse 16. In der Mittelscheibe 24 ist eine Geometrie eines Kühlkanals 34 ausgebildet und die Mittelscheibe 24 weist in der Geometrie des Kühlkanals 34 Stege 32 auf, deren Funktion bereits beschrieben wurde. Des Weiteren ist die Rotorachse 5 dargestellt.

In Fig. 5 a) ist eine perspektivische Darstellung des Einzelschäumteils der Ringscheibe 25 der ersten Ausführung in einer ersten Ansicht gezeigt. Die Ringscheibe ist in ein erstes und in ein zweites Ringschäumteil 35, 36 einteilbar. Am Außenumfang 15 des zweiten Ringschäumteils 36 sind Geometrien für Vorsprünge 44 angeordnet, deren Funktion später beschrieben wird. Die Ringscheibe 25 ist durch zwei unterschiedliche Verfahren herstellbar. In einem erstem Verfahren werden das erste und das zweite Ringschäumteil 35, 36 separat hergestellt, anschließend koaxial zur Rotorachse 5 gefügt und an einer Klebenaht 37 zueinander in jeder beliebigen gewünschten Winkelposition zur Rotorachse 5 zusammengeklebt. Ein zweites Verfahren zur Herstellung der Ringscheibe 25 ergibt sich aus der Beschreibung der Fig. 6.

In Fig. 5 b) ist eine perspektivische Darstellung der Ringscheibe 25 der ersten Ausführung aus den zwei Ringschäumteilen 35, 36 in einer Draufsicht auf das erste Ringschäumteil 35 gezeigt. Im ersten Ringschäumteil 35 ist eine Geometrie eines Kühlkanals 38 ausgebildet, die Stege 33 aufweist. Des Weiteren ist die Rotorachse 5 dargestellt. Die Geometrie des Kühlkanals 38 inklusive der Stege 33 des Ringschäumteils 35 gibt vor, in welcher Winkelposition die Ringscheibe 25 an die Mittelscheibe 24 geklebt wird. Das zweite Ringschäumteil 36 wird so ausgerichtet, dass die Anforderungen an vorgegebene Schnittstellen erfüllt werden.

Fig. 6 zeigt eine Darstellung einer Schnittzeichnung eines Werkzeugs 39 zur Herstellung des Einzelschäumteils der Ringscheibe 25. In diesem zweitem Verfahren zur Herstellung des Einzelschäumteils der Ringscheibe 25 wird das Werkzeug 39 aus einer ersten und einer zweiten Ringschäumformhälfte 40, 41 gebildet, wobei die beiden Ringschäumformhälften 40, 41 an einer Kontaktfläche 42 koaxial zur virtuellen Rotorachse 105 gefügt, bzw. geschlossen werden. Die Ringschäumformhälften 40, 41, die auch als Kavitäten bezeichnet werden, können zueinander in beliebiger Winkelposition zur Rotorachse 105 geschlossen werden. Die Ausrichtung zueinander wird durch Anforderungen an die Schnittstellen bestimmt. Im Inneren 43 des Werkzeugs 39 wird das Einzelschäumteil der Ringscheibe 25 gebildet, wobei die erste Ringschäumformhälfte 40 die Form des ersten Ringschäumteils 35 bildet und die zweite Ringschäumformhälfte 41 die Form des zweiten Ringschäumteils 36 bildet.

In Fig. 7 ist eine perspektivische Darstellung eines Gehäusegussrohlings 122 der ersten Ausführung der Erfindung gezeigt. Der Gehäusegussrohlings 122 ist in einem Guss aus Metall durch das Lost-Foam-Verfahren hergestellt und kann von der Ringseite 9 an in ein Ringteil 125, ein Mittelteil 124 und ein Lagerschildteil 123 eingeteilt werden. Am Außenumfang 15 des Ringteils 125 sind an der Ringseite 9 Vorsprünge 44 angeordnet, an denen, nach deren Bearbeitung, das Lagerschild 11 der elektrischen Maschine 1 befestigt wird. Die Bearbeitung sieht beispielsweise vor, in die Vorsprünge 44 Durchgangsöffnungen zu bohren oder Gewinde zu schneiden, um das Lagerschild 11 zum Beispiel mit Schrauben am Gehäuse 2 zu befestigen. Am Außenumfang 15 des Mittelteils 124 sind Öffnungen 26 angeordnet, die beispielsweise zum Einstecken und/oder Einschrauben der Kühlmittelanschlüsse 16 dienen.

Fig. 8 zeigt eine perspektivische Darstellung der erfindungsgemäß hergestellten elektrischen Maschine 1 der ersten Ausführung mit angeschraubten Lagerschild 11. Das Gehäuse 2 der elektrischen Maschine 1 ist in das Lagerschildteil 123, das Mittelteil 124 und das Ringteil 125 unterteilbar, wobei das Ringteil 125 in ein erstes und ein zweites Ringteil 135, 136 unterteilbar ist. Das Lagerschild 11 ist über Schraubverbindungen 45 an den Vorsprüngen 44 des zweiten Ringteils 136 befestigt und an dem Lagerschild 11 ist eine Anbindung 46 angeordnet. Die Anbindung 46 stellt eine vorgegebene Schnittstelle dar und ist in dieser Ausführungsform ein Hochvoltanschluss der elektrischen Maschine 1. Zudem weist das Mittelteil 124 am Außenumfang 15 zwei Kühlmittelanschlüsse 16 auf. Die Winkelposition des zweiten Ringteils 136 zum ersten Ringteil 135 wird durch die Position der Anbindung 46 zu den Kühlmittelanschlüssen 16 bestimmt.

In Fig. 9 ist eine Seitenansicht der elektrischen Maschine 1 der ersten Ausführung an einer vorhandenen Komponente 47 gezeigt. Die elektrische Maschine 1 ist an der Lagerschildseite 6 des Gehäuses 2 über die Vorsprünge 29, insbesondere durch Schraubverbindungen an der Komponente 47 befestigt. Die vorhandene Komponente 47 ist zum Beispiel ein Getriebe im Antriebsstrang eines Kraftfahrzeugs, insbesondere eines Hybridfahrzeugs oder eines Elektrofahrzeugs. Die elektrische Maschine 1 kann aber beispielsweise auch direkt an ein Rad des Kraftfahrzeugs befestigt werden, oder an sonstigen vorhandenen Komponenten 47, die durch die elektrische Maschine 1 für den Antrieb des Kraftfahrzeugs sorgen, bzw. Energie auf die elektrische Maschine 1 übertragen.

Fig. 10 a) zeigt eine Draufsicht auf die Ringseite 9 der ersten Ausführung des Gehäuses 2. Dargestellt sind die Vorsprünge 29 des Lagerschildteils 123, der Kühlmittelanschluss 16 des Mittelteils 124 und im das zweite Ringteil 136 des Ringteils 125 mit den Vorsprüngen 44 zur Befestigung des Lagerschilds 11. Zur Beschreibung eines Winkels α sind eine erste und eine zweite Hilfslinie 48, 49 dargestellt. Die erste Hilfslinie 48 ist durch die Rotorachse 5 und den Kühlmittelanschluss 16 gezogen und die zweite Hilfslinie 49 durch die Rotorachse 5 und einen Absatz 50 am zweiten Ringteil 136. Der Winkel α beschreibt die Winkelposition des zweiten Ringteils 136 zum Kühlmittelanschluss 16 des Mittelteils 124 und somit die Position der vorhandenen Schnittstellen zueinander.

Fig. 10 b) zeigt eine Draufsicht auf die Ringseite 9 einer zweiten Ausführung des Gehäuses 102. Die Darstellung ist analog zu Fig. 10a), mit dem Unterschied, dass das zweite Ringteil 136 um einen größeren Winkel β zum Kühlmittelanschluss 16 angeordnet ist als der Winkel α in Fig. 10 a). Zur Darstellung ist eine dritte Hilfslinie 51 durch den Absatz 50 und die Rotorachse 5 gezogen. Im Vergleich zum in Fig. 10 a) dargestellten Gehäuse 2 wurde das zweite Ringteil 136 des Gehäuses 102 in dieser Ausführung um den Winkel (β-a) verdreht gegossen.

In Fig. 11 ist eine perspektivische Darstellung eines Gehäuseschäumteils 222 einer dritten Ausführung mit verlängerter Lagerschildscheibe 223 gezeigt. Zur Herstellung dieser verlängerten Lagerschildscheibe 223 wird ein in der Länge geändertes Werkzeug zur Herstellung des Schäumlings gefertigt. Das Gehäuseschäumteil 222 wird wie in Fig. 2 beschrieben hergestellt, indem die unveränderte Mittelscheibe 24 mit der verlängerten Lagerschildscheibe 223 koaxial zur Rotorachse 5 verklebt wird und anschließend die Ringscheibe 25 mit der Mittelscheibe 24 verklebt wird.

Eine andere Möglichkeit das Gehäuseschäumteil 22 und somit resultierend das Gehäuse 2 axial zu verlängern ist die Verlängerung der des Einzelschäumteils der Ringscheibe 25 und dort im speziellen das erste Ringschäumteil 35. Je nach Aufbau und Anforderung an die elektrische Maschine 1 ist es sinnvoll jeweils nur ein Einzelschäumteil 23, 25 axial zu verlängern oder beide Einzelschäumteile 23, 25. Die Mittelscheibe 24, aus der nach dem Giessen das Mittelteil 124 entformt wird, wird in seiner axialen Ausdehnung konstant gehalten.

Die Festlegung des Gehäuseschäumteils 22 in eine axial konstant gehaltenen Mittelscheibe 24, eine variable Lagerschildscheibe 23 und eine variable Ringscheibe 25 macht es zudem möglich, dass die Durchmesser der beiden Einzelschäumformen 23, 25 relativ unabhängig vom Durchmesser der Mittelscheibe 24 variiert werden können. Dadurch wird eine freie Gestaltung bezüglich der Komponente 47 an der Schnittstelle auf der Lagerschildseite 6 und/oder eine flexible Anbindung an die Ringseite 9 des Gehäuses 2, und somit die Anbindung des Lagerschilds 11 erreicht.

Der Aufbau des Gehäuses 2 durch die Gehäuseschäumform 22 und den drei Einzelschäumteilen 23, 24, 25 muss so gewählt werden, dass die Vielfalt der verschiedenen Einzelschäumteile 23, 24, 25 eingeschränkt wird und eine Abdeckung der meisten verschiedenen vorgegebenen Schnittstellen, sowie Statoren 3 durch jeweils ein Fertigschäumwerkzeug für die Herstellung der Schäumteile 23, 24, 25 erreicht wird.

Zu bemerken ist, dass die aus Kunststoff bestehenden Schäumteile auch als Schäumlinge (englisch: foam part) bezeichnet werden. Die Werkzeuge zur Herstellung der Schäumteile werden als Schäumformen (englisch: foam tool) bezeichnet.

## Patentansprüche

1. Verfahren zur Herstellung einer elektrischen Maschine (1), bestehend aus einem Gehäuse (2), einem in dem Gehäuse (2) aufgenommenen Stator (3), der zumindest aus einem Statorkörper (19) und Statorwicklungen (20) gebildet wird, einem Rotor (4), der in dem Gehäuse (2) drehbar um eine Rotorachse (5) gelagert wird, und einem an dem Gehäuse (2) befestigten Lagerschild (11), wobei das Gehäuse (2) in folgenden Verfahrensschritten hergestellt wird:
- Herstellen eines Gehäuseschäumteils (22)
- Herstellen eines Gehäusegussrohlings (122) mittels des Gehäuseschäumteils (22) durch ein Lost-Foam-Gussverfahren, wobei der Gehäusegussrohling (122) das Gehäuse (2) bildet,
**dadurch gekennzeichnet, dass**
- das Gehäuseschäumteil (22) aus zumindest drei Einzelschäumteilen (23, 24, 25) hergestellt wird, wobei die Einzelschäumteile (23, 24, 25) folgende sind:
i. eine Mittelscheibe (24), die eine im Wesentlichen hohlzylindrische Bauform aufweist und ein Zwischenstück des Gehäuseschäumteils (22) bildet,
ii. eine Ringscheibe (25), die eine im Wesentlichen hohlzylindrische Bauform aufweist und ein weiteres Zwischenstück des Gehäuseschäumteils (22) bildet und
iii. eine Lagerschildscheibe (23), die eine im Wesentlichen topfförmige Bauform aufweist und ein Ende des Gehäuseschäumteils (22) bildet.

2. Verfahren nach Anspruch 1, **dadurch gekennzeichnet, dass** die Einzelschäumteile (23, 24, 25) so durch ein Klebeverfahren miteinander verbunden werden, dass
- die Einzelschäumteile (23, 24, 25) koaxial zur Rotorachse (5) angeordnet werden,
- in wenigstens einem Einzelschäumteil (23, 24, 25) Grundgeometrien von Kühlkanälen (30, 34, 38) ausgebildet werden, so dass die ausgebildeten Grundgeometrien der Kühlkanäle (30, 34, 38) in dem Gehäuseschäumteil (22) eine durchgängige Grundgeometrie eines Kühlkanals (14) des Gehäuses (2) bilden und
- die Einzelschäumteile (23, 24, 25) in solcher Weise aneinander gefügt sind, dass in dem Einzelschäumteil (23, 24, 25) ausgebildete Grundgeometrien der Kühlkanäle (30, 34, 38) in dem Gehäuseschäumteil (22) eine durchgängige Grundgeometrie des Kühlkanals (14) bilden.

3. Verfahren nach Anspruch 1 oder 2, **dadurch gekennzeichnet, dass** das Gehäuseschäumteil (22) in seiner Ausdehnung in axialer Richtung veränderbar ist, indem
- das Einzelschäumteil der Ringscheibe (25) in seiner axialen Ausdehnung verändert wird und/oder
- das Einzelschäumteil der Lagerschildscheibe (23) in seiner axialen Ausdehnung verändert wird.

4. Verfahren nach einem der Ansprüche 1 bis 3, **dadurch gekennzeichnet, dass** das Einzelschäumteil der Ringscheibe (25)
- aus einer erstem und einem zweiten Ringschäumteil (35, 36) gebildet wird und beide Ringschäumteile (35, 36) koaxial zur Rotorachse (5) gefügt werden, wobei sie zueinander in eine Vielzahl von Winkelpositionen bezüglich der Rotorachse (5) drehbar ausrichtbar sind oder
- aus einem Einzelschäumteil (25) gebildet wird, wobei das Einzelschäumteil (25) durch ein Werkzeug (39) aus zwei Ringschäumformhälften (40, 41) hergestellt wird, die koaxial zur Rotorachse (5) gefügt werden und die zueinander in eine Vielzahl von Winkelpositionen bezüglich der Rotorachse (5) drehbar ausrichtbar sind.

5. Verfahren nach Anspruch 4, **dadurch gekennzeichnet, dass** die Position des ersten und zweiten Ringschäumteils (35, 36) und/oder der ersten und zweiten Ringschäumformhälfte (40, 41) zueinander durch die Anordnung
- am Gehäuse (2) angeordnete Kühlmittelanschlüsse (16) und
- einer am Lagerschild (11) angeordneten Anbindung (46) vorgegeben wird.

6. Verfahren nach Anspruch 1, **dadurch gekennzeichnet, dass** der Gehäusegussrohling (122) innenseitig spanabhebend bearbeitet wird und dabei ein Anschlag (18) ausgebildet wird, an dem der Statorkörper (19) nach der Montage des Stators (3) im Gehäuse (2) anliegt.

7. Elektrische Maschine (1) für ein Hybridfahrzeug hergestellt durch ein Verfahren nach einem der Ansprüche 1 bis 6, **dadurch gekennzeichnet, dass** das Gehäuse (2) analog zum Gehäuseschäumteil (22) ein Lagerschildteil (123), ein Mittelteil (124) und ein Ringteil (125) aufweist und
- das Lagerschildteil (123) an einer Endseite (9) Vorsprünge (29) zur Befestigung an vorhandenen Komponenten (47) und an der Endseite (9) radial in Richtung der Rotorachse (5) eine Lageraufnahme (7) aufweist,
- das Mittelteil (124) Kühlmittelanschlüsse (16) am Außenumfang (15) aufweist und
- das Ringteil (125) über den Außenumfang (15) verteilte Vorsprünge (44) aufweist, an denen das Lagerschild (11) anbringbar ist.

8. Elektrische Maschine (1) für ein Hybridfahrzeug hergestellt durch ein Verfahren nach Anspruch 5, **dadurch gekennzeichnet, dass** die am Lagerschild (11) angeordnete Anbindung (46) ein Hochvoltanschluss ist.

## Claims

1. Method for manufacturing an electrical machine (1), consisting of a housing (2), a stator (3), which is accommodated in the housing (2) and is formed at least from a stator body (19) and stator windings (20), a rotor (4), which is mounted in the housing (2) rotatably about a rotor axis (5), and a bearing plate (11), which is fastened to the housing (2), the housing (2) being produced in the following method steps:
- producing a housing foam part (22)
- producing a housing cast blank (122) by means of the housing foam part (22) by a lost foam casting process, the housing cast blank (122) forming the housing (2),
**characterized in that**
- the housing foam part (22) is produced from at least three individual foam parts (23, 24, 25), the individual foam parts (23, 24, 25) being the following:
i. a central disc (24), which has an essentially hollow-cylindrical design and forms an intermediate piece of the housing foam part (22),
ii. an annular disc (25), which has an essentially hollow-cylindrical design and forms a further intermediate piece of the housing foam part (22), and
iii. a bearing plate disc (23), which has an essentially cup-shaped design and forms an end of the housing foam part (22).

2. Method according to Claim 1, **characterized in that** the individual foam parts (23, 24, 25) are connected to one another by a bonding process such that
- the individual foam parts (23, 24, 25) are arranged coaxially in relation to the rotor axis (5),
- in at least one individual foam part (23, 24, 25), basic geometries of cooling channels (30, 34, 38) are developed such that the developed basic geometries of the cooling channels (30, 34, 38) in the housing foam part (22) form a continuous basic geometry of a cooling channel (14) of the housing (2), and
- the individual foam parts (23, 24, 25) are joined to one another in such a way that basic geometries of the cooling channels (30, 34, 38) developed in the individual foam part (23, 24, 25) form a continuous basic geometry of the cooling channel (14) in the housing foam part (22).

3. Method according to Claim 1 or 2, **characterized in that** the housing foam part (22) is variable in its extent in the axial direction **in that**
- the individual foam part of the annular disc (25) is changed in its axial extent and/or
- the individual foam part of the bearing plate disc (23) is changed in its axial extent.

4. Method according to one of Claims 1 to 3, **characterized in that** the individual foam part of the annular disc (25)
- is formed from a first and a second annular foam part (35, 36) and the two annular foam parts (35, 36) are joined coaxially in relation to the rotor axis (5), it being possible for them to be aligned in relation to one another rotatably in a multitude of angular positions with respect to the rotor axis (5) or
- from one individual foam part (25), the individual foam part (25) being produced by a tool (39) comprising two annular foam mould halves (40, 41), which are joined coaxially in relation to the rotor axis (5), and which can be aligned in relation to one another rotatably in a multitude of angular positions with respect to the rotor axis (5).

5. Method according to Claim 4, **characterized in that** the position of the first and second annular foam parts (35, 36) and/or the first and second annular foam mould halves (40, 41) in relation to one another is predefined by the arrangement
- of coolant connectors (16) arranged on the housing (2) and
- a terminal (46) arranged on the bearing plate (11).

6. Method according to Claim 1, **characterized in that** the housing cast blank (122) is machined on the inside and a stop (18), against which the stator body (19) lies after the stator (3) has been mounted in the housing (2), is thereby developed.

7. Electrical machine (1) for a hybrid vehicle, manufactured by a method according to one of Claims 1 to 6, **characterized in that**, by analogy with the housing foam part (22), the housing (2) has a bearing plate part (123), a central part (124) and an annular part (125) and
- the bearing plate part (123) has on one end side (9) projections (29) for fastening to existing components (47) and on the end side (9) radially in the direction of the rotor axis (5) a bearing seat (7),
- the central part (124) has coolant connectors (16) on the outer circumference (15) and
- the annular part (125) has projections (44), which are distributed over the outer circumference (15) and to which the bearing plate (11) can be attached.

8. Electrical machine (1) for a hybrid vehicle manufactured by a method according to Claim 5, **characterized in that** the terminal (46) arranged on the bearing plate (11) is a high-voltage terminal.

## Revendications

1. Procédé de fabrication d'une machine électrique (1), se composant d'un boîtier (2), d'un stator (3) logé dans le boîtier (2), qui est formé par au moins un corps de stator (19) et des enroulements de stator (20), d'un rotor (4), qui est monté dans le boîtier (2) de façon rotative autour d'un axe de rotor (5), et d'un flasque (11) fixé au boîtier (2), dans lequel on fabrique le boîtier (2) par les étapes de procédé suivantes:
- fabrication d'une partie en mousse de boîtier (22),
- fabrication d'une ébauche coulée de boîtier (122) au moyen de la partie en mousse de boîtier (22) par un procédé de coulée en mousse perdue, dans lequel l'ébauche coulée de boîtier (122) forme le boîtier (2),
**caractérisé en ce que**
- la partie en mousse de boîtier (22) est fabriquée à partir d'au moins trois parties en mousse individuelles (23, 24, 25), dans lequel les parties en mousse individuelles (23, 24, 25) sont les suivantes:
i. une virole moyenne (24), qui présente une forme de montage essentiellement cylindrique creuse et qui forme une pièce intermédiaire de la partie en mousse de boîtier (22),
ii. une virole (25), qui présente une forme de montage essentiellement cylindrique creuse et qui forme une autre pièce intermédiaire de la partie en mousse de boîtier (22), et
iii. une virole de flasque (23), qui présente une forme de montage essentiellement en forme de pot et qui forme une extrémité de la partie en mousse de boîtier (22).

2. Procédé selon la revendication 1, **caractérisé en ce que** les parties en mousse individuelles (23, 24, 25) sont assemblées l'une à l'autre par un procédé de collage, de telle manière que
- les parties en mousse individuelles (23, 24,25) soient disposées coaxialement à l'axe de rotor (5),
- des géométries de base de canaux de refroidissement (30, 34, 38) sont formées dans au moins une partie en mousse individuelle (23, 24, 25), de telle manière que les géométries de base formées des canaux de refroidissement (30, 34, 38) forment dans la partie en mousse de boîtier (22) une géométrie de base continue d'un canal de refroidissement (14) du boîtier (2), et
- les parties en mousse individuelles (23, 24, 25) soient, jointes l'une à l'autre d'une manière telle que des géométries de base des canaux de refroidissement (30, 34, 38) formées dans la partie en mousse individuelle (23, 24, 25) forment dans la partie en mousse de boîtier (22) une géométrie de base continue du canal de refroidissement (14).

3. Procédé selon la revendication 1 ou 2, **caractérisé en ce que** la partie en mousse de boîtier (22) peut présenter une extension variable en direction axiale, du fait que
- la partie en mousse individuelle de la virole annulaire (25) peut être modifiée au niveau de son extension axiale, et/ou
- la partie en mousse individuelle de la virole de flasque (23) peut être modifiée au niveau de son extension axiale.

4. Procédé selon l'une quelconque des revendications 1 à 3, **caractérisé en ce que** la partie en mousse individuelle de la virole annulaire (25)
- est formée par une première et une deuxième parties en mousse annulaires (35, 36) et les deux parties en mousse annulaires (35, 36) sont jointes coaxialement à l'axe de rotor (5), dans lequel elles peuvent être alignées l'une par rapport à l'autre dans une multiplicité de positions angulaires d'une façon rotative par rapport à l'axe de rotor (5) ou
- est formée par une partie en mousse individuelle (25), dans lequel la partie en mousse individuelle (25) est formée par un outil (39) à partir de deux moitiés de moule en mousse annulaires (40, 41), qui sont jointes coaxialement à l'axe de rotor (5) et qui peuvent être alignées l'une par rapport à l'autre dans une multiplicité de positions angulaires de façon rotative par rapport à l'axe de rotor (5).

5. Procédé selon la revendication 4, **caractérisé en ce que** la position de la première et de la deuxième parties en mousse annulaires (35, 36) et/ou de la première et de la deuxième moitiés de moule en mousse annulaires (40, 41) est prédéterminée par l'agencement
- de raccords d'agent de refroidissement (16) disposés sur le boîtier (2) et
- d'une liaison (46) disposée sur le flasque (11).

6. Procédé selon la revendication 1, **caractérisé en ce que** l'ébauche coulée de boîtier (122) est usinée intérieurement par enlèvement de copeaux et une butée (18) est en l'occurrence formée, sur laquelle le corps de stator (19) s'applique après le montage du stator (3) dans le boîtier (2).

7. Machine électrique (1) pour un véhicule hybride fabriquée par un procédé selon l'une quelconque des revendications 1 à 6, **caractérisée en ce que** le boîtier (2) présente, de manière analogue à la partie en mousse de boîtier (22), une partie de flasque (123), une partie moyenne (124) et une partie annulaire (125), et
- la partie de flasque (123) présente sur un côté d'extrémité (9) des saillies (29) pour la fixation à des composants présents (47) et sur le côté d'extrémité (9) radialement en direction de l'axe de rotor (5) un logement de palier (7),
- la partie moyenne (124) présente des raccords d'agent de refroidissement (16) à la périphérie extérieure (15), et
- la partie annulaire (125) présente des saillies (44) réparties sur la périphérie extérieure (15), sur lesquelles le flasque (11) peut être posé.

8. Machine électrique (1) pour un véhicule hybride fabriquée par un procédé selon la revendication 5, **caractérisée en ce que** la liaison (46) disposée sur le flasque (11) est un raccord à haute tension.
